# EUROPEAN PATENT SPECIFICATION

(11) **EP 3 827 962 B1**
(45) Date of publication and mention of the grant of the patent: **04.11.2026**
(21) Application number: 19211515.2
(22) Date of filing: 26.11.2019
(51) Int. Cl.: B29C 48/44, B29C 44/20

(54) **FOAMED POLYMERIC COMPOSITION**
GESCHÄUMTE POLYMERE ZUSAMMENSETZUNG
COMPOSITION POLYMÈRE MOUSSÉE

(43) Date of publication of application: 02.06.2021
(73) Proprietor: 3M Innovative Properties Company, Saint Paul, MN 55133-3427 (US)
(72) Inventor: Apeldorn, Thomas, 41453 Neuss (DE); Kempf, Michael, 41453 Neuss (DE); Kalish, Jeffrey Paul, Saint Paul, Minnesota 55133-3427 (US)
(74) Representative: Mathys & Squire

(56) References cited:
- EP-A1- 2 918 388
- WO-A1-2014/183984
- WO-A2-03/092982
- DE-A1- 102007 050 681
- DE-C1- 3 712 749
- JP-A- H11 147 943
- JUDITH WINCK ET AL.: "Investigation of CO2-blown polylactide foams by experimental characterization and theoretical modeling", 30 April 2018 (2018-04-30), Antibes, France, XP002799249, Retrieved from the Internet <URL:https://www.researchgate.net/publication/329273087_Investigation_of_CO2-blown_polylactide_foams_by_experimental_characterization_and_theoretical_modeling> [retrieved on 20200603]
- JUDITH WINCK ET AL.: "CO2-assisted foaming of PLA by using a planetary roller extruder for an enhanced mass and heat transfer", 30 September 2018 (2018-09-30), Montreal, CA, XP002799250, Retrieved from the Internet <URL:https://www.researchgate.net/publication/329271539_CO2-assisted_foaming_of_PLA_by_using_a_planetary_roller_extruder_for_an_enhanced_mass_and_heat_transfer> [retrieved on 20200603]

## Description

### Technical Field

The present invention relates to a method of manufacturing foamed polymeric compositions, more specifically foamed adhesive compositions, and to an extrusion apparatus suitable for forming such foamed polymeric compositions.

### Background

DE 37 12 749 C1, JP H11 147943 A, WO 03/093982 A2, DE 10 2007 0500691 A1, WO 2014/183984 A1, EP 2 918 388 A1 each describe methods of making foamed polymeric compositions.

Judith Winck et al.: in "CO2-assisted foaming of PLA by using a planetary roller extruder for an enhanced mass and heat transfer", 16th International Conference on Advances in Foam Materials & Technology, at Montreal, Canada, 30 September 2018, Montreal, CA, XP002799250 discuss the manufacture of polymeric foams where the foaming process of polylactide (PLA) using a planetary roller extruder as mixing and cooling device was investigated.

Judith Winck et al. describe in "Investigation of CO2-blown polylactide foams by experimental characterization and theoretical modeling", 12th International Symposium on Supercritical Fluids, at Antibes, France, 30 April 2018, Antibes, France, XP002799249 that supercritical C02 is used as physical blowing agent to process the biopolymer Polylactide (PLA) into a microcellular foam and the continuous foam extrusion is carried out by a tandem-line extrusion unit consisting of a single-screw melt extruder and a planetary roller extruder as a downstream mixing and cooling device. It is also described that the PLA melt is conveyed by a gear pump from the single-screw extruder into the planetary roller extruder wherein further process steps are taking place inside the planetary roller extruder where the temperature profile of the planetary roller extruder is varied over Zone 1, Zone 2, Zone 3 and Zone 4/ Die thereof, compressed CO₂ is injected by a three head positive displacement pump between the second and third rolling cylinder; the CO₂ saturated polymer melt is homogenized and cooled down within the third and fourth zone; and subsequently, the mixture is conveyed through a 2.5 mm filamentary die, where nucleation and foam expansion occurs.

Foamed polymeric compositions have been known for quite some time and have been used for various applications including mechanical buffering, such as shock absorption and vibration damping, as well as compliance to irregular substrates. Partly due to these beneficial properties, foamed polymeric compositions have been increasingly used for the manufacturing of adhesive compositions and adhesive tapes, in particular pressure-sensitive adhesive tapes.

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives. As applications for pressure-sensitive adhesives have increased substantially in recent years, performance requirements have become increasingly demanding.

Materials that have been found to function well as pressure sensitive adhesives are polymers designed and formulated to exhibit the requisite viscoelastic properties resulting in a desired balance of tack, peel adhesion, and shear strength. The most commonly used polymers for preparation of pressure sensitive adhesives are various (meth)acrylate-based copolymers, natural rubber, synthetic rubbers, and silicones.

Pressure sensitive adhesive polymeric foams are used as attachment devices for a wide variety of assembly and manufacturing applications, such as interior or exterior automotive mounting of panels and moldings. In a variety of such applications, adhesion to rough or irregular surfaces is desired or necessitated. Under these circumstances, thicker conformable pressure sensitive adhesive foams generally outperform thin pressure sensitive adhesives (such as those less than 0,125 mm (125 microns) thick). In addition, many applications require pressure sensitive adhesives to support a load at elevated temperatures, typically in the range of from 70°C to 90°C, for which high cohesive strengths are required.

In addition to increasing performance requirements for pressure sensitive adhesives, volatile organic compounds (VOC) reduction regulations are becoming increasingly important in particular for various kind of interior applications (occupational hygiene and occupational safety) such as e.g. in the construction market or in the automotive or electronics industries. Known acrylate-based pressure sensitive adhesives typically contain notable amounts of low molecular weight organic residuals, such as un-reacted monomers arising from their polymerization process, polymerization initiator residuals, contaminations from raw materials or degradation products formed during the manufacturing process. These low molecular weight residuals qualifying as VOC may diffuse out of the adhesive tape and can be potentially harmful. Furthermore, the most commonly known method for foaming polymeric compositions, in particular pressure sensitive adhesive compositions, involves using expandable microspheres which typically comprise materials qualifying as VOC and therefore contribute in increasing the overall VOC content.

The reduction of organic solvent usage in the manufacturing process of pressure sensitive adhesives has quickly emerged as one straightforward means to reduce the overall VOC levels. The use of specific scavengers for organic contaminants, as described in WO 01/44400 (Yang), is another alternative way to achieve reduced VOC levels. However, these solutions for reducing overall VOC levels are often associated with increased manufacturing complexity and production costs. Also, the overall VOC levels observed often do not fulfill the requirements for various kind of interior applications such as e.g. in the construction market or in the automotive or electronics industries. Another alternative solution known in the art involves using specific rubber-based polymeric material, as described e.g. in US-A1-2016145406 (Bieber et al.). The disclosed solution typically suffers from lack of versatility and formulation flexibility.

Without contesting the technical advantages associated with the pressure sensitive adhesives known in the art, there is still a need for a stable and cost-effective foamed polymeric composition provided with excellent overall VOC characteristics.

### Summary

According to one aspect of the present invention, an extrusion apparatus is provided comprising:
a) a planetary roller extruder;
b) a melt pump arranged downstream of the planetary roller extruder;
c) a static cooling mixer equipment arranged downstream of the melt pump; and
d) a fluid feeding equipment in fluid connection with the static cooling mixer equipment;
wherein the extrusion apparatus is configured to introduce a physical foaming agent via the fluid feeding equipment into the static cooling mixer equipment and to mix, in the static cooling mixer equipment, the physical foaming agent with a hot melt processable polymeric composition in supercritical conditions of the physical foaming agent; and wherein the extrusion apparatus further comprises:
e) a foaming equipment arranged downstream of the static cooling mixer equipment.

In another aspect of the present invention a process of manufacturing a foamed polymeric composition is provided, comprising the steps of:
a) providing an extrusion apparatus comprising a planetary roller extruder, a melt pump arranged downstream of the planetary roller extruder, a static cooling mixer equipment arranged downstream of the melt pump, a foaming equipment arranged downstream of the extrusion apparatus, and a fluid feeding equipment in fluid connection with the static cooling mixer equipment;
b) providing a hot melt processable polymeric composition in the planetary roller extruder;
c) optionally, degassing the hot melt processable polymeric composition;
d) exposing the hot melt processable polymeric composition to increased pressure and temperature conditions so that the pressure and temperature conditions of hot melt processable polymeric composition is greater than the supercritical pressure (P_{c}) and the supercritical temperature (T_{c}) conditions for a physical foaming agent;
e) providing, in the static cooling mixer equipment via the fluid feeding equipment, a physical foaming agent in supercritical conditions of the physical foaming agent ;
f) mixing the hot melt processable polymeric composition and the physical foaming agent in the static cooling mixer equipment thereby forming a precursor of a foamed polymeric composition, wherein the physical foaming agent is mixed with the hot melt processable polymeric composition in supercritical conditions of the physical foaming agent;
g) optionally, reducing the pressure and/or temperature conditions of the precursor of a foamed polymeric composition whereby the pressure and temperature conditions are still greater than the supercritical pressure (P_{c}) and the supercritical temperature (T_{c}) conditions for the physical foaming agent; and
h) passing the precursor of a foamed polymeric composition through the foaming equipment and exposing the composition to a reduced pressure, whereby the physical bowing agent expands resulting in foaming of the precursor of a foamed polymeric composition.

A foamed polymeric composition obtained from the process as described above can be used for industrial applications, in particular for construction market applications, transportation market applications and electronic applications.

### Brief Description of the Drawings

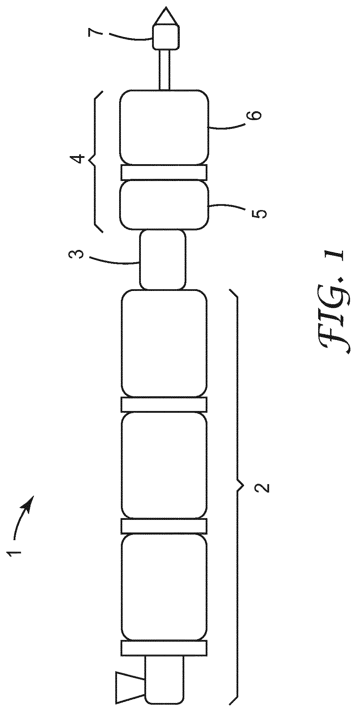

FIG. 1 illustrates a schematic side view of an extrusion apparatus according to one aspect of the present invention.

### Detailed description

According to a first aspect, the present invention relates to an extrusion apparatus comprising:
a) a planetary roller extruder;
b) a melt pump arranged downstream of the extruder;
c) a static cooling mixer equipment arranged downstream of the melt pump;
d) a fluid feeding equipment in fluid connection with the static cooling mixer equipment; and
e) a foaming equipment arranged downstream of the static cooling mixer equipment.
The extrusion apparatus is configured to introduce a physical foaming agent via the fluid feeding equipment into the static cooling mixer equipment and to mix, in the static cooling mixer equipment, the physical foaming agent with a hot melt processable polymeric composition in supercritical conditions of the physical foaming agent.

It has been surprisingly found that an extrusion apparatus in accordance with the present invention is particularly suitable for forming a foamed polymeric composition provided with excellent characteristics and performance as to overall VOC levels reduction.

Foamed polymeric compositions provided using the extrusion apparatus and/or the process of manufacture according to the present invention are characterized by low VOC levels, typically less than 400 ppm, when measured by thermal desorption analysis according to test method VDA278. In some advantageous cases, foamed polymeric compositions are characterized by very low or even substantial absence of perceptible odor.

As such, foamed polymeric compositions produced while using the extrusion apparatus of the present invention are particularly suited for (industrial) interior applications, more in particular for construction market applications, automotive applications or electronic applications. In the context of automotive applications, such foamed polymeric compositions may find particular use for adhering e.g. automotive body side mouldings, weather strips or rearview mirrors. Regarding electronic applications, such foamed polymeric compositions are particularly suitable for the fixation of display panels in mobile hand-held electronic devices.

Without wishing to be bound by theory, it is believed that the excellent characteristics and performance as to overall VOC levels reduction of the foamed polymeric compositions directly result from the use of the extrusion apparatus of present invention, in particular to the use of the four constituting elements of the apparatus, i.e. the planetary roller extruder, the melt pump, the optional fluid feeding equipment, the static cooling mixer and the foaming equipment arranged in the very specific sequence (together with a fluid feeding equipment in fluid connection with the static cooling mixer equipment) as detailed above.

It has been further surprisingly found that extrusion apparatus according to the present invention is outstandingly suitable for the foaming of a polymeric composition with a physical foaming agent which is in particular provided in supercritical conditions of the physical foaming agent.

The use of a physical foaming agent has been found to be particularly beneficial in the context of the present disclosure as it provides excellent overall VOC levels reduction performance, and in particular improved VOC levels reduction when compared to using expandable microspheres which is one of the most commonly known technical solution for foaming polymeric compositions. The use of a physical foaming agent further obviates the need to take specific technical measures to preserve the otherwise sensitive expandable microspheres during the overall processing.

The use of a physical foaming agent specifically provided in supercritical conditions has been found to allow higher loading and faster diffusion rate of the physical foaming agent into the (hot melt processable) polymeric composition, when compared to the use of a physical foaming agent in non-supercritical state. Physical foaming agents in supercritical state also provide more homogeneous and stable distribution of the physical foaming agent into the polymeric melt, thereby producing an improved solution of the physical foaming agent.

It has been further found that the use of a planetary roller extruder as the (exclusive) hot melt mixing and processing equipment is outstandingly suitable to achieve VOC levels reduction due in particular to its excellent devolatilization performance during hot melt processing of the polymeric composition. Without wishing to be bound by theory, it is believed that this excellent VOC reduction performance of the planetary roller extruder as hot melt processing equipment is due in particular to the following attributes: low shear mixing, high surface area and excellent melt temperature control during processing of the polymeric composition. In particular, it is believed that the intensive elongational flow/mixing provided by the planetary extruder, in combination with the relatively low level of shear energy enables improved dispersing mixing. The large contact surface area due to the specific geometry of the spindles used in the planetary roller extruder is believed to not only improve the degassing effectiveness of the extruder, but to also to provide improved heat and energy dissipation during processing. As such, the use of a planetary roller extruder also allows using shear and temperature sensitive materials.

For at least part of the technical performance attributes described above, the use of a planetary roller extruder as hot melt processing equipment is generally more advantageous than the use of screw extruders such as single screw extruders or even twin-screw extruders in the context of a process of forming a foamed polymeric composition.

The use of a planetary roller extruder in the context of a process of forming a foamed polymeric composition by using physical foaming agent, in particular in supercritical conditions, is particularly counterintuitive as planetary roller extruders are generally recognized as not being suitable to be used in combination with physical foaming agents, especially when provided in supercritical conditions. Indeed, and because of the high free volume within the barrel sections of the planetary roller extruder, a high back flow of material is expected to result in a very low pump efficiency which is normally unsuitable for physical foaming agents, in particular inappropriate to create the type of high pressure needed for the foaming with a physical foaming agent in a supercritical state. Moreover, if reaching the suitable pressures needed for the foaming with a physical foaming agent would be possible, the processing zone of the planetary roller barrels would be expected to be fully filled and a degassing or devolatilization step would normally not be possible. A partially filled processing zone would be normally needed to avoid the leakage of processed material under the pressure conditions needed for the foaming and degassing steps.

In the context of the present disclosure, it has been counterintuitively found that planetary roller extruders can be used as hot melt processing equipment in the context of a process of forming a foamed polymeric composition by using physical foaming agent, in particular in supercritical conditions.

In order to enable the somewhat contradicting combination of foaming with a physical foaming agent, in particular in supercritical conditions, and efficiently devolatilization, the planetary roller extruder is combined with: a melt pump arranged downstream of the planetary roller extruder; a static cooling mixer equipment arranged downstream of the melt pump; a foaming equipment arranged downstream of the static cooling mixer equipment; and a fluid feeding equipment in fluid connection with the static cooling mixer equipment.

Advantageously, the planetary roller extruder for use herein does not require any specific design modification and does not require to be gas-tight when used in the process of forming a foamed polymeric composition according to the present invention. Accordingly, conventional or commonly known planetary roller extruders may be used in the context of the present disclosure. Advantageously still, the various other constituting elements of the extrusion apparatus may be simply retrofitted to the planetary roller extruder in the above described sequence.

According to an advantageous embodiment, the melt pump is divided into two different processing zones, each having a different pressure level. The pressure at the entrance of the pump is relatively low to enable efficient devolatilization in the planetary roller extruder upstream the melt pump. The pressure at the exit of the melt pump is relatively high to enable the foaming with the physical foaming agent, in particular when provided in its supercritical conditions. Advantageously, this beneficial separation of the melt pump in two processing zones allows choosing optimal processing parameters (such as e.g. temperature, screw speeds) within the planetary roller extruder, which are disconnected from and not influenced by the processing parameters needed for the foaming with the physical foaming agent.

In order to further enable the dosing and foaming process with the physical foaming agent, a static cooling mixer equipment is arranged downstream of the melt pump, which is used to inject the physical foaming agent, especially at relatively high pressure, to achieve a good distribution of the physical foaming agent within the (hot melt processed) polymeric composition, and finally to cool the resulting (melt) composition.

It has been found that physical foaming agents act like plasticizers when mixed with the (hot melt processed) polymeric composition, thereby substantially reducing the viscosity of the resulting (melt) composition to such an extent that the viscosity characteristic of the (melt) composition might be unsuitable for the overall foaming process. It was found that suitable cooling/mixing beneficially impacts (in particular increases) the viscosity of the (melt) composition thereby rendering possible the further processing steps and the overall foaming process. It was additionally found that suitable cooling/mixing in the static cooling mixer equipment advantageously impacts the distribution of the physical foaming agent into the (melt) composition and provides excellent cell stabilization performance in the resulting foamed polymeric composition.

As discussed above, the extrusion apparatus of the present invention comprises a foaming equipment arranged downstream of the static cooling mixer. The foaming equipment has the technical function of finalizing the foaming process by allowing the physical foaming agent to expand, in particular at the time it exits the foaming equipment. More advantageously, the foaming equipment is able to cause nucleation of the physical foaming agent and cell formation within the precursor of a foamed polymeric composition.

The term "foamed polymeric composition" is meant to designate a polymeric material which comprises voids, typically in an amount of at least 5% by volume, typically from 10% to 55% by volume or from 10% to 45% by volume. The voids, such as cells, are formed by the physical foaming agent according to the foaming as described hereinafter.

The expression "physical foaming agent in supercritical conditions" is meant to refer to those supercritical pressure (Pc) and supercritical temperature (Tc) conditions under which the physical foaming agent, which is typically a gas at ambient temperature (23°C) and pressure (1013 hPa), is compressed to a state where it has the density and solvation characteristics of a liquid, but the viscosity, permeability and diffusivity of a gas. A supercritical physical foaming agent is a single-phase material which exists above a critical point, which point is determined by the supercritical pressure (Pc) and supercritical temperature (Tc), and which values depend on the particular physical foaming agent. As an example, the Tc and Pc values for carbon dioxide are respectively 31°C and 7.4 MPa.

The term "nucleation" is meant to designate a process by which a homogeneous solution of polymeric material and dissolved molecules of a species, that is typically a gas under ambient conditions, undergoes formations of clusters of molecules of the species that define "nucleation sites" from which cells will grow. In other words, the nucleation designates a change from a homogeneous solution to a multi-phase mixture in which, throughout the polymeric material, sites of aggregation of at least several molecules of physical foaming agent are formed.

The extrusion apparatus of the present invention comprises a planetary roller extruder as a first constituting element. Planetary roller extruders for use herein are not particularly limited. Any commonly known planetary roller extruder may be used without requiring any specific modification or adaptation. Suitable planetary roller extruders for use herein may be easily identified by those skilled in the art, in the light of the present disclosure. Exemplary planetary roller extruders for use herein are commercially available from Entex GmbH, Germany.

The extrusion apparatus of the present invention further comprises a melt pump arranged downstream of the planetary roller extruder. Melt pumps for use herein are not particularly limited. Suitable melt pumps for use herein may be easily identified by those skilled in the art, in the light of the present disclosure. Exemplary melt pumps for use herein are commercially available from Witte Pumps & Technology GmbH, Mahr Metering Systems GmbH, Germany or Nordson Corporation, USA.

According to an advantageous embodiment, the melt pump for use herein is designed and configured such as to provide a first processing zone Z1 having a pressure P1 (also referred to hereinafter as low-pressure zone) and a second processing zone Z2 having a pressure P2 (also referred to hereinafter as high-pressure zone) within the melt pump.

In such embodiment of the melt pump, typically, the two processing zones Z1 and Z2 are distinct and independent zones of the melt pump, which are however in fluid communication with each other.

In another typical case of such an embodiment of the melt pump, the pressure P2 of the second processing zone Z2 is greater than the pressure P1 of the first processing zone Z1.

In a beneficial embodiment of such a melt pump, the pressure P2 is greater than 6.5 MPa, greater than 7 MPa, greater than 7.5 MPa, greater than 8 MPa, greater than 10 MPa, greater than 12 MPa, greater than 15 MPa, greater than 18 MPa, greater than 20 MPa, greater than 23 MPa, greater than 25 MPa, or even greater than 28 MPa.

In another beneficial embodiment of such a melt pump, the pressure P2 is in a range from 7 to 30 MPa, from 7.5 to 30 MPa, from 8 to 28 MPa, from 10 to 28 MPa, from 15 to 28 MPa, from 18 to 28 MPa, or even from 20 to 28 MPa.

In still another beneficial embodiment of such a melt pump, the difference between P1 and P2 is greater than 3 MPa, greater than 5 MPa, greater than 10 MPa, greater than 15 MPa, or even greater than 20 MPa.

In yet another beneficial embodiment of such a melt pump, the pressure P1 is no greater than 4.0 MPa, no greater than 3.5 MPa, no greater than 2.5 MPa, no greater than 2.0 MPa, no greater than 1.5 MPa, or even no greater than 1.0 MPa.

The optimal values of pressures P1 and P2 of the two processing zones Z1 and Z2 may be adjusted depending on the specific polymeric composition, the specific physical foaming agent, the specific configurations of the planetary roller extruder, the melt pump, the fluid feeding equipment and the static cooling mixer equipment.

The extrusion apparatus of the present invention comprises a static cooling mixer equipment arranged downstream of the melt pump. Static cooling mixer equipment for use herein are not particularly limited. Suitable static cooling mixer equipment for use herein may be easily identified by those skilled in the art, in the light of the present disclosure. Exemplary static cooling mixer equipment for use herein are commercially available from Promix Solutions AG, Germany.

According to an advantageous embodiment of the extrusion apparatus, the static cooling mixer equipment for use herein is a two-part equipment which comprises a static mixer and a cooling mixer. Advantageously, the static mixer is selected from the group of static injection mixers.

Suitable static mixers and cooling mixers for use herein may be easily identified in the light of the present disclosure by those skilled in the art of polymer extrusion.

According to a particular embodiment, the static mixer is directly arranged downstream of the melt pump and the cooling mixer is directly arranged downstream of the static mixer.

In another advantageous embodiment of static cooling mixer for use in the extrusion apparatus and/or the process of manufacture according to the present invention, the static mixer comprises static mixing elements, which are in particular not actively temperature controlled.

In still another advantageous embodiment of static cooling mixer for use the extrusion apparatus and/or the process of manufacture according to the present invention, the cooling mixer comprises static mixing elements which are hollow, and temperature controlled, in particular by oil.

The extrusion apparatus of the present invention comprises a fluid feeding equipment. Fluid feeding equipment for use herein are not particularly limited. Suitable fluid feeding equipment for use herein may be easily identified by those skilled in the art, in the light of the present disclosure.

In an advantageous embodiment, the fluid feeding equipment for use herein is selected from the group of gas feeding equipment and may beneficially take the form of a (gas) injection port.

The fluid feeding equipment for use herein is in fluid connection with the static cooling mixer equipment, in particular in preferred embodiments in fluid connection with a static mixer of static cooling mixer equipment. According to this preferred configuration, the static mixer for use herein may qualify as a static injection mixer.

The fluid feeding equipment for use herein is advantageously used to provide the physical foaming agent, in particular to introduce the physical foaming agent into the hot melt processed polymeric composition.

The extrusion apparatus of the present invention comprises a foaming equipment arranged downstream of the static cooling mixer. Foaming equipment for use herein are not particularly limited. Suitable foaming equipment for use herein may be easily identified by those skilled in the art, in the light of the present disclosure. Suitable foaming equipment for use herein are commercially available e.g. from AxFlow GmbH, Germany.

In an advantageous embodiment, the foaming equipment for use herein is selected from the group of foaming dies. Typically, the foaming equipment for use herein also functions as a shaping equipment.

According to one advantageous embodiment of the extrusion apparatus, the foaming equipment for use herein is a foaming die, in particular a single layer or a multi-layer die.

According to an exemplary embodiment, the foaming equipment for use herein is selected from the group consisting of slot dies, tubular dies, annular dies, strand dies, single bubble dies, and double bubble dies.

In one beneficial embodiment, the extrusion apparatus may further comprise degassing means, in particular vacuum pumps or vacuum degassing units.

In one advantageous embodiment thereof, such the degassing means are in fluid connection with the planetary roller extruder, in particular with a downstream section of the planetary roller extruder.

It has been found that the use of degassing means in combination with the extrusion apparatus advantageously affects its overall VOC levels reduction performance.

The extrusion apparatus of the present invention may further comprise additional secondary equipment commonly known in the art of polymer extrusion. In particular, the extrusion apparatus of the disclosure may further comprise any of solid feeders, liquid feeders, gas feeders, grid melters, drum unloaders, and any combinations thereof. According to an advantageous embodiment, such additional equipment is connected to the planetary roller extruder, in particular along the processing unit of the planetary roller extruder.

According to a particularly preferred configuration, the extrusion apparatus is (substantially) free of additional extrusion equipment, in particular free of additional hotmelt extrusion equipment, more in particular single screw extruder and twin-screw extruder. Preferably, the planetary roller extruder is the sole extrusion equipment of the extrusion apparatus.

FIG. 1 illustrates a schematic side view of an exemplary extrusion apparatus 1 in accordance with the present invention, wherein the apparatus comprises a planetary roller extruder 2, a melt pump 3 arranged directly downstream of the extruder 2, a static cooling mixer equipment 4 which is arranged directly downstream of the melt pump 3 and comprising a static mixer 5 and a cooling mixer 6, and wherein the extrusion apparatus 1 further comprises a foaming equipment 7 arranged directly downstream of the static cooling mixer equipment 4. (The fluid feeding equipment in fluid connection with the static cooling mixer equipment is not shown.)

As indicated above, another aspect of the present invention is directed to a process of manufacturing a foamed polymeric composition, comprising the steps of:
a) providing an extrusion apparatus comprising a planetary roller extruder, a melt pump arranged downstream of the planetary roller extruder, a static cooling mixer equipment arranged downstream of the melt pump, a foaming equipment arranged downstream of the static cooling mixer equipment, and a fluid feeding equipment in fluid connection with the static cooling mixer equipment;
b) providing a hot melt processable polymeric composition in the planetary roller extruder;
c) optionally, degassing the hot melt processable polymeric composition;
d) exposing the hot melt processable polymeric composition to increased pressure and temperature conditions so that the pressure and temperature conditions of hot melt processable polymeric composition is greater than the supercritical pressure (P_{c}) and the supercritical temperature (T_{c}) conditions for aphysical foaming agent;
e) providing, in the static cooling mixer equipment via the fluid feeding equipment, the physical foaming agent in supercritical conditions of the physical foaming agent;
f) mixing the hot melt processable polymeric composition and the physical foaming agent in the static cooling mixer equipment thereby forming a precursor of a foamed polymeric composition, wherein the physical foaming agent is mixed with the hot melt processable polymeric composition in supercritical conditions of the physical foaming agent;
g) optionally, reducing the pressure and/or temperature conditions of the precursor of a foamed polymeric composition whereby the pressure and temperature conditions are still greater than the supercritical pressure (P_{c}) and the supercritical temperature (T_{c}) conditions for the physical foaming agent; and
h) passing the precursor of a foamed polymeric composition through the foaming equipment and exposing the composition to a reduced pressure, whereby the physical bowing agent expands resulting in foaming of the precursor of a foamed polymeric composition.

In a typical embodiment of this process, the step of mixing the hot melt processable polymeric composition and the physical foaming agent is performed in such pressure and temperature conditions sufficient for the physical foaming agent to be uniformly distributed throughout the hot melt processable polymeric composition.

Advantageously, the physical foaming agent is provided and mixed with the hot melt processable polymeric composition in supercritical conditions of the physical foaming agent, in particular in pressure and temperature conditions greater than the supercritical pressure (P_{c}) and the supercritical temperature (T_{c}) conditions for the physical foaming agent.

According to a particular embodiment of the process of manufacturing a foamed polymeric composition, the supercritical pressure (Pc) for use herein is greater than 6.5 MPa, greater than 7 MPa, greater than 7.5 MPa, greater than 8 MPa, greater than 10 MPa, greater than 12 MPa, greater than 15 MPa, greater than 18 MPa, greater than 20 MPa, greater than 23 MPa, greater than 25 MPa, or even greater than 28 MPa.

According to a more particular embodiment, the supercritical pressure (Pc) for use herein is in a range from 7 to 30 MPa, from 7.5 to 30 MPa, from 8 to 28 MPa, from 10 to 28 MPa, from 15 to 28 MPa, from 18 to 28 MPa, or even from 20 to 28 MPa.

According to another particular embodiment of the process of manufacturing a foamed polymeric composition, the supercritical temperature (Tc) for use herein is greater than 70°C, greater than 80°C, greater than 90°C, greater than 100°C, greater than 120°C, greater than 140°C, greater than 150°C, greater than 160°C, greater than 180°C, greater than 200°C, greater than 220°C, greater than 240°C, greater than 250°C, greater than 260°C, or even greater than 280°C.

According to still another particular embodiment, the supercritical temperature (Tc) for use herein is no greater than 250°C, no greater than 220°C, no greater than 200°C, no greater than 190°C, no greater than 180°C, no greater than 170°C, or even no greater than 160°C.

According to yet another particular embodiment, the supercritical temperature (Tc) for use herein is in a range from 75 to 250°C, from 75 to 220°C, from 75 to 180°C, from 80 to 180°C, from 100 to 170°C, from 100 to 165°C, from 110 to 165°C, from 120 to 165°C, from 130 to 165°C, from 140 to 165°C, from 140 to 160°C, or even from 150 to 160°C.

In an advantageous embodiment of the process, the (optional) step of reducing the pressure and temperature of the precursor of a foamed polymeric composition, whereby the pressure and temperature conditions are still greater than the supercritical pressure (Pc) and the supercritical temperature (Tc) conditions for the physical foaming agent, is performed such that the reduced temperature is equal to or less than 50°C below the initial temperature of the precursor of a foamed polymeric composition.

In another advantageous embodiment of the process, the (optional) step of reducing the pressure and temperature of the precursor of a foamed polymeric composition, whereby the pressure and temperature conditions are still greater than the supercritical pressure (Pc) and the supercritical temperature (Tc) conditions for the physical foaming agent, is performed such that the reduced temperature is no greater than 250°C, no greater than 220°C, no greater than 200°C, no greater than 180°C, no greater than 150°C, no greater than 140°C, no greater than 130°C, no greater than 120°C, no greater than 110°C, no greater than 100°C, or even no greater than 90°C.

In still another advantageous embodiment of the process, the (optional) step of reducing the pressure and temperature conditions of the precursor of a foamed polymeric composition, whereby the pressure and temperature conditions are still greater than the supercritical pressure (Pc) and the supercritical temperature (Tc) conditions for the physical foaming agent, is performed such that the reduced pressure is no greater than 20 MPa, no greater than 19 MPa, no greater than 18 MPa, no greater than 17 MPa, no greater than 16 MPa, no greater than 15 MPa, no greater than 14 MPa, or even no greater than 13 MPa.

In yet another advantageous embodiment of the process, the (optional) step of reducing the pressure and temperature of the precursor of a foamed polymeric composition, whereby the pressure and temperature conditions are still greater than the supercritical pressure (P_{c}) and the supercritical temperature (T_{c}) conditions for the physical foaming agent, is performed such that the reduced pressure is in a range from 8 to 18 MPa, from 9 to 16 MPa, from 10 to 15 MPa, from 11 to 15 MPa, from 11 to 14 MPa, from 12 to 14 MPa, or even from 12 to 13 MPa.

According to a typical embodiment of the process, the step of passing the precursor of the foamed polymeric composition through the foaming equipment and exposing the composition to a reduced pressure, is typically performed at atmospheric pressure (i.e. about 101.3 kPa).

According to another typical embodiment of the process, the step of passing the precursor of the foamed polymeric composition through the foaming equipment and exposing the composition to a reduced pressure, is performed at a temperature greater than 20°C, greater than 25°C, greater than 40°C, greater than 80°C, greater than 100°C, greater than 150°C, or even greater than 200°C.

According to still another typical embodiment of the process, the step of passing the precursor of the foamed polymeric composition through the foaming equipment and exposing the composition to a reduced pressure, is performed at a temperature no greater than 250°C, no greater than 220°C, no greater than 200°C, no greater than 180°C, no greater than 150°C, no greater than 120°C, no greater than 110°C, no greater than 100°C, or even no greater than 90°C.

According to still another typical embodiment of the process, the step of passing the precursor of the foamed polymeric composition through the foaming equipment and exposing the composition to a reduced pressure, is performed at a temperature in a range from 25 to 250°C, from 25 to 220°C, from 25 to 200°C, from 25 to 180°C, from 25 to 160°C, from 25 to 140°C, from 25 to 120°C, from 25 to 110°C, from 30 to 110°C, from 40 to 100°C, from 50 to 100°C, from 60 to 100°C, from 60 to 95°C, from 70 to 95°C, or even from 70 to 90°C.

According to still another typical embodiment of the process, the step of passing the precursor of the foamed polymeric composition through the foaming equipment and exposing the composition to a reduced pressure causes nucleation of the physical foaming agent and cell formation within the precursor of a foamed polymeric composition.

Advantageously, the physical foaming agent for use in processes herein may be selected from the group consisting of carbon dioxide, nitrogen, SF₆, nitrous oxide, perfluorinated fluids, hydrofluorocarbons, hydrochlorofluorocarbons, hydrocarbons (such as e.g. heptane, pentane), argon, helium, noble gases, air (nitrogen and oxygen blend), and any combinations or mixtures thereof.

More advantageously, the physical foaming agent for use herein is selected from the group consisting of carbon dioxide, nitrogen, air, and any combinations or mixtures thereof.

In a preferred embodiment, the physical foaming agent is selected to comprise carbon dioxide. More preferably, the physical foaming agent for use herein consists (essentially) of carbon dioxide.

In a typical embodiment, the hot melt processable polymeric composition for use herein is selected from the group consisting of thermoplastic materials, elastomeric materials, thermoplastic elastomer materials, thermoplastic non-elastomeric materials, and any combinations or mixtures thereof.

In an advantageous embodiment, the hot melt processable polymeric material for use herein is selected from the group consisting of (amorphous or semi-crystalline) thermoplastic materials, and any combinations or mixtures thereof.

According to a more advantageous embodiment, the hot melt processable polymeric composition for use herein is selected from the group consisting of pressure sensitive adhesive thermoplastic compositions.

According to another advantageous embodiment, the hot melt processable polymeric composition for use herein is selected from the group consisting of rubber-based elastomeric materials, rubber-based non-elastomeric materials, polycarbonates, polyacrylics, polyacrylonitriles, polyvinyl chlorides, alkylene-vinyl acetate copolymers, alkylene-acrylic acid copolymers, polyurethanes, polyesters, polyamides, polyolefins, polyphenylene oxides, and any combinations or mixtures thereof.

According to another advantageous embodiment, the hot melt processable polymeric composition for use herein is selected from the group consisting of rubber-based elastomeric materials, rubber-based non-elastomeric materials, polyacrylics, and any combinations or mixtures thereof.

In a more advantageous embodiment, the hot melt processable polymeric composition for use herein is selected from the group consisting of rubber-based elastomeric materials.

In an even more advantageous embodiment, the rubber-based elastomeric material for use herein is selected from the group consisting of olefinic block copolymers, acrylate block copolymers, styrenic block copolymers, styrene-isoprene-styrene block copolymers, styrene-butadiene-styrene block copolymers, styrene-ethylene/butadiene-styrene block copolymers, styrene-ethylene/propylene-styrene block copolymers, styrene-butadiene random copolymers, polyisoprene polymers, polybutadiene polymers, halogenated butyl rubbers, and any combinations or mixtures thereof.

In a preferred embodiment, the rubber-based elastomeric material for use herein comprises a block copolymer architecture which is in particular selected from the group consisting of olefinic block copolymers, acrylate block copolymers, styrenic block copolymers, styrene-isoprene-styrene block copolymers, styrene-butadiene-styrene block copolymers, styrene-ethylene/butadiene-styrene block copolymers, styrene-ethylene/propylene-styrene block copolymers, and any combinations or mixtures thereof.

In a particularly preferred embodiment, the hot melt processable polymeric composition for use herein comprises rubber-based elastomeric materials, which are in particular selected from the group consisting of styrenic block copolymers, more in particular styrene-isoprene-styrene block copolymers and styrene-butadiene-styrene block copolymers.

According to a beneficial embodiment, the step of hotmelt processing the polymeric composition in the planetary roller extruder is performed at a processing pressure no greater than 4.0 MPa, no greater than 3.5 MPa, no greater than 2.5 MPa, no greater than 2.0 MPa, no greater than 1.5 MPa, or even no greater than 1.0 MPa.

According to a typical embodiment, the optional step of degassing the hot melt processable polymeric composition is performed while the hot melt processable polymeric composition is still in the planetary roller extruder.

According to another typical embodiment, the optional degassing step is performed using degassing means, in particular vacuum pumps or vacuum degassing units.

In another typical embodiment, the degassing means for use herein are in fluid connection with the planetary roller extruder, in particular with a downstream section of the planetary roller extruder.

In advantageous embodiments of the process according to the present invention, the extrusion apparatus for use in the process of manufacturing a foamed polymeric composition, is an extrusion apparatus according the first aspect of the present invention as described above.

In a typical embodiment of the process of present invention e, the step of exposing the hot melt processable polymeric composition to increased pressure conditions, in particular to pressure conditions greater than the supercritical pressure (P_{c}) for the physical foaming agent, is performed in the melt pump, in particular in the second processing zone Z2 of the melt pump.

In another typical embodiment of the process of the present invention, the optional step of exposing the hot melt processable polymeric composition to increased temperature conditions, in particular to temperature conditions greater than the supercritical temperature (Tc) conditions for the physical foaming agent, is performed at least partly in the melt pump, in particular in the second processing zone Z2 of the melt pump.

In the process, the step of providing a physical foaming agent is performed in the static cooling mixer equipment, in particular in a static mixer part of the static cooling mixer equipment.

The step of providing a physical foaming agent is performed using the fluid feeding equipment in fluid connection with the static cooling mixer equipment, in particular in fluid connection with a static mixer part of the static cooling mixer equipment. Typically, the fluid feeding equipment for use herein takes the form of an injection port.

In the process, the step of mixing the hot melt processable polymeric composition and the physical foaming agent thereby forming a precursor of a foamed polymeric composition, is performed in the static cooling mixer equipment, in particular through the entire length of the static cooling mixer equipment.

In still another advantageous embodiment of the process, the optional step of reducing the pressure and temperature conditions of the precursor of a foamed polymeric composition, whereby the pressure and temperature conditions are still greater than the supercritical pressure (Pc) and the supercritical temperature (Tc) conditions for the physical foaming agent, is performed (at least partly) in the static cooling mixer equipment.

All the particular and preferred configurations relating to, in particular, the extrusion apparatus, the planetary roller extruder, the melt pump, the fluid feeding equipment, the static cooling mixer equipment, and the foaming equipment, which were described hereinabove in the context of the extrusion apparatus of the present invention, are fully applicable to the process of manufacturing a foamed polymeric composition of the present invention.

Foamed polymeric compositions obtained from the process of the present invention, may advantageously have a Volatile Organic Compound (VOC) value of less than 400 ppm, less than 380 ppm, less than 360 ppm, less than 350 ppm, less than 340 ppm, less than 300 ppm, less than 280 ppm, less than 260 ppm, less than 250 ppm, less than 240 ppm, less than 220 ppm, less than 200 ppm, less than 180 ppm, less than 160 ppm, or even less than 150 ppm, when measured by thermal desorption analysis according to test method VDA278.

Foamed polymeric compositions obtained from the process of the present invention may have a density in a range from 0.30 to 0.65 g/cm³, from 0.35 to 0.65 g/cm³, from 0.40 to 0.65 g/cm³, from 0.40 to 0.60 g/cm³, from 0.45 to 0.60 g/cm³, from 0.45 to 0.55 g/cm³, or even from 0.45 to 0.55 g/cm³, when measured according to test method ASTM D792.

Foamed polymeric compositions obtained from the process of the present invention may have an average cell size no greater than 300 micrometers, no greater than 280 micrometers, no greater than 260 micrometers, no greater than 240 micrometers, no greater than 220 micrometers, no greater than 200 micrometers, no greater than 180 micrometers, no greater than 160 micrometers, no greater than 140 micrometers, no greater than 120 micrometers, no greater than 100 micrometers, no greater than 80 micrometers, no greater than 70 micrometers, no greater than 60 micrometers, no greater than 50 micrometers, or even no greater than 40 micrometers.

Foamed polymeric compositions obtained from the process of the present invention may have an average cell size in a range from 30 to 350 micrometers, from 40 to 320 micrometers, from 40 to 300 micrometers, from 40 to 280 micrometers, from 50 to 260 micrometers, from 50 to 240 micrometers, from 50 to 220 micrometers, from 60 to 200 micrometers, from 60 to 180 micrometers, or even from 70 to 180 micrometers.

Unless otherwise indicated, the average cell size of the foamed polymeric composition and cell size distribution polydispersity are measured by Scanning Electron Microscopy (SEM) Imaging using techniques commonly known to those skilled in the art, in particular digital image micrographs and Image Tool Software.

Foamed polymeric compositions obtained from the process of the present invention may have a cell size distribution polydispersity in a range from 1.0 to 2.0, or even from 1.0 to 1.5.

Foamed polymeric compositions obtained from the process of the present invention and which are provided with relatively small and/or uniform cell sizes have been found to have uniform characteristics and properties throughout the foamed polymeric compositions, as well as advantageous mechanical properties. In particular, foamed polymeric compositions provided with relatively small cell sizes are less prone to defects or cracks propagation through the foam structure, and allow thinner foam substrates to be produced.

In a particularly beneficial embodiment of processes according to the invention, the manufactured foamed polymeric composition is a foamed pressure sensitive adhesive composition.

As such, foamed polymeric compositions obtained via processes of manufacture according to the present invention are particularly suited for (industrial) interior applications, more in particular for construction market applications, automotive applications or electronic applications. In the context of automotive applications, such polymeric foamed compositions may find particular use for adhering e.g. automotive body side mouldings, weather strips or rearview mirrors. Regarding electronic applications, such foamed polymeric compositions are particularly suitable for the fixation of display panels in mobile hand-held electronic devices.

Foamed polymeric compositions obtained via processes of manufacture according to the present invention may be used for industrial applications.

Foamed polymeric compositions obtained via processes of manufacture according to the present invention may be used for interior applications, in particular for construction market applications and transportation market applications, in particular automotive and aerospace applications, more in particular for taped seal on body, taped seal on door, exterior and interior parts attachment and weather-strip tape applications for the automotive industry.

Foamed polymeric composition obtained via processes of manufacture according to the present invention may be used for electronic applications, in particular for the fixation of display panels in mobile hand-held electronic devices.

Foamed polymeric compositions obtained via processes of manufacture according to the present invention may be used for bonding to a low surface energy substrate and/or a medium surface energy substrate, in particular automotive clear coats/paints.

### EXAMPLES

The present invention is further illustrated by the following examples. These examples are merely for illustrative purposes only and are not meant to be limiting on the scope of the appended claims.

### Test methods and procedures:

### Thermal desorption analysis of organic emissions according to VDA test method 278

VDA method 278 is a test method used for the determination of organic emissions from non-metallic trim components used to manufacture the interior of motor vehicles (VDA stands for "Verband der Automobilindustrie", the German Association of Automobilists). For the VOC value, the method involves determining the sum of volatile and semi-volatile compounds up to n-C₂₀ which are emitted.

For measuring the VOC values, samples of 30 mg +/- 5 mg are weighed directly into empty glass sample tubes. The volatile and semi-volatile organic compounds are extracted from the samples into the gas stream and are then re-focused onto a secondary trap prior to injection into a Agilent 7890B GC system for analysis. An automated thermal desorber (Markes International Ultra-UNITY system) is hereby used for the VDA 278 testing.

For the VOC analysis, the test method comprises an extraction stage which involves desorbing the sample at 90°C for 30 minutes to extract VOC's up to n-C₂₀. This is followed by a semi-quantitative analysis of each compound as µg toluene equivalents per gram of sample. The results expressed are the average of 2 measurements per sample. The higher value of the measurements is indicated as the result, as described in the VDA278 test method.

### Raw materials used:

The raw materials and commercial adhesive tapes used are summarized below in Table 1.

**Table 1: Raw material list.**

| Name | Description | Supplier |
|---|---|---|
| Kraton D1111 | Linear triblock copolymer based on styrene and butadiene with a polystyrene content of 31% | Kraton polymers |
| Kraton D1119 | Linear triblock copolymer based on styrene and butadiene with a polystyrene content of 22% | Kraton polymers |
| Kraton D1161 | Linear triblock copolymer based on styrene and butadiene with a polystyrene content of 15% | Kraton Polymers |
| PP Braskem DC 7057 | PP impact copolymer | Braskem |
| PP Daploy WB 140 HMS | Isomeric modified PP homopolymer | Borealis |
| Talc | Nucleating agent | Imerys Talc Belgium |
| CO₂ | Physical foaming agent, carbon dioxide gas | Linde |

### Devices and technical elements used:

The devices and technical elements used are summarized below in Table 2.

**Table 2: Devices and technical elements.**

| Name | Description | Supplier |
|---|---|---|
| PWE70-M3 | Planetary roller extruder | Entex |
| Typ GPA 36/36-01 | Melt pump | Nordson Kreyenborg |
| P1 Static Cooling Mixer | Static cooling mixer | Promix Solutions AG |
| APV Die | Sheet extrusion foaming die | AxFlow |

The melt pump, the static cooling mixer and the foaming die are retrofitted to the planetary roller extruder as represented in Figure 1.

### Polymer compounding and sample preparation:

### Exemplary preparation of foamed polymeric compositions

The compositions of the exemplary foamed polymeric compositions (Examples E1 to E7) are listed in Table 3 below (in parts).

**Table 3: Chemical composition of the exemplary foamed polymeric compositions.**

| | E1 | E2 | E3 | E4 | E5 | E6 | E7 |
|---|---|---|---|---|---|---|---|
| Kraton D1111 | 94 | | | | | | |
| Kraton D1119 | | | 94 | 88 | 86 | 81 | |
| Kraton D1161 | | 94 | | | | | |
| PP DC 7057 | | | | | | | 37 |
| PP WB 140 HMS | | | | | | | 55 |
| Talc | 4 | 4 | 4 | 10 | 10 | 18 | 7 |
| CO₂ | 2 | 2 | 2 | 2 | 4 | 1 | 1 |

### Foamed polymeric composition preparation

The foamed polymeric compositions are made using the extrusion apparatus as detailed in Table 2. The extrusion apparatus comprises a total of 8 heat zones: three in the planetary roller extruder, one in the melt pump, two in the static cooling mixer, one in the foaming die, and one in the heated hose which makes the junction between the static cooling mixer and the foaming die. The processing conditions, in particular the temperature and pressure profile of the extrusion apparatus, are described in Tables 4 and 5 below.

### Examples E1 to E6:

**Table 4: Processing conditions (temperature profile) for the exemplary foamed polymeric compositions E1 to E6.**

| Zone (Barrel) | Temperature (°C) | Description |
|---|---|---|
| Z1 (Planetary extruder) | 180 | Feeding of Kraton polymer and talc (10 kg/h) |
| Z2 (Planetary extruder) | 180 | |
| Z3 (Planetary extruder) | 180 | |
| Z4 (Melt Pump) | 180 | |
| Z5 (Static mixer composition - electrical heating of surface) | 235 | Injection of super critical CO₂ |
| Z6 (Static mixer composition - cooling of static mixing elements with oil) | 155 | |
| Z7 (Heated hose) | 160 | |
| Z8 (Foaming Die) | 120 | Coating and expansion of the melt |

The screw speed is set at 100 rpm at a throughput of 10 kg/h. The melted polymer enters the melt pump at a pressure of 2.5 MPa. The pressure is increased to values in a range from 22 to 26 MPa at the exit of the melt pump. The static cooling mixer composition creates a pressure loss in a range from 5.6 to 12 MPa. The pressure at the entry of the foaming die is as shown in Table 5 below.

**Table 5: Processing conditions (pressure profile) for the exemplary foamed polymeric compositions E1 to E6.**

| | E1 | E2 | E3 | E4 | E5 | E6 |
|---|---|---|---|---|---|---|
| Pressure at entry to foaming die [MPa] | 15 | 15.5 | 15.8 | 15.8 | 16.9 | 9.8 |

### Example E7:

**Table 6: Processing conditions (temperature profile) for the exemplary foamed polymeric composition E7.**

| Zone (Barrel) | Temperature (°C) | Description |
|---|---|---|
| Z1 (Planetary extruder) | 200 | Feeding of PP polymers and talc (7.5 kg/h) |
| Z2 (Planetary extruder) | 200 | |
| Z3 (Planetary extruder) | 200 | |
| Z4 (Melt Pump) | 190 | |
| Z5 (Static mixer composition - electrical heating of surface) | 230 | Injection of super critical CO₂ |
| Z6 (Static mixer composition - cooling of static mixing elements with oil) | 160 | |
| Z7 (Heated hose) | 160 | |
| Z8 (Foaming Die) | 140 | Coating and expansion of the melt |

The screw speed is set at 100 rpm at a throughput of 7.5 kg/h. The melted polymer enters the melt pump at a pressure of 1 MPa. The pressure is increased to 24 MPa at the exit of the melt pump. The static cooling mixer composition creates a pressure loss of 10 MPa. The pressure at the entry of the foaming die is 10.7 MPa.

### Test Results:

### Foam density

The foam density of the foamed polymeric compositions of Examples E1 to E7 are determined according to Test method ASTM D792. The results are described in Table 7 below.

**Table 7: Foam density measurements**

| | E1 | E2 | E3 | E4 | E5 | E6 | E7 |
|---|---|---|---|---|---|---|---|
| Foam Density (g/cm³) | 0.66 | 0.75 | 0.77 | 0.83 | 0.83 | 0.85 | 0.25 |

As can be seen from the results of Table 7, foamed polymeric compositions having a broad range of foam densities may be obtained according to the present disclosure.

### Compression

The compression set characteristics of the foamed polymeric compositions of Examples E1 to E7 under load and without load are determined according to the following test procedure. Samples with an area of 25.4 mm x 25.4 mm and a thickness between 5 - 10 mm are prepared. The foamed samples are compressed at maximum force between two plates. The reduction of thickness (compression set under load in %) relative to the initial thickness is measured after 24h compression under maximum force. The compression set without load (in %) describes the thickness which is achieved after removing the compression, relative to the initial thickness. The compression set without load is measured 24h after removal of the compression force. The percentage for compression set under load and for the compression set without load are measured as follows: $Compression set under load , % = \left({t}_{24 h compressed under load}\times 100\right) / \left({t}_{initial}-100\right)$ $Compression set without load , % = \left({t}_{24 h after removal of compression force}\times 100\right) / \left({t}_{initial}-100\right)$

The results are described in Table 8 below.

**Table 8: Mechanical properties measurements**

| | E1 | E2 | E3 | E4 | E5 | E6 | E7 |
|---|---|---|---|---|---|---|---|
| Compression set 24h under load (%) | 34 | 35 | 39 | 37 | 42 | 37 | 39 |
| Compression set 24h after removal of compression force (%) | 94 | 89 | 89 | 85 | 84 | 97 | 66 |

As can be seen from the results of Table 8, the foamed polymeric compositions according to the present disclosure have advantageous mechanical properties.

## Claims

1. An extrusion apparatus (1) comprising:
a) a planetary roller extruder (2);
b) a melt pump (3) arranged downstream of the planetary roller extruder;
c) a static cooling mixer equipment (4) arranged downstream of the melt pump; and
d) a fluid feeding equipment in fluid connection with the static cooling mixer equipment;
wherein the extrusion apparatus is configured to introduce a physical foaming agent via the fluid feeding equipment into the static cooling mixer equipment and to mix, in the static cooling mixer equipment, the physical foaming agent with a hot melt processable polymeric composition in supercritical conditions of the physical foaming agent; and
wherein the extrusion apparatus further comprises:
e) a foaming equipment (7) arranged downstream of the static cooling mixer equipment.

2. An apparatus (1) according to claim 1, wherein the static cooling mixer equipment (4) comprises a static mixer (5) and a cooling mixer (6).

3. An apparatus (1) according to claim 2, wherein the fluid feeding equipment is in fluid connection with the static mixer (5).

4. An apparatus (1) according to any of claims 1 to 3, wherein the melt pump (3) is designed such as to provide a first processing zone Z1 having a pressure P1 and a second processing zone Z2 having a pressure P2 within the melt pump.

5. An apparatus (1) according to claim 4, wherein the first processing zone Z1 and the second processing zone Z2 are two distinct processing zones, wherein P2 is greater than P1, wherein P2 is greater than 6.5 MPa, and wherein the difference between P1 and P2 is greater than 3 MPa.

6. An apparatus (1) according to any of claims 1 to 5, wherein the fluid feeding equipment is in the form of an injection port.

7. A process of manufacturing a foamed polymeric composition, comprising the steps of:
a) providing an extrusion apparatus (1) comprising a planetary roller extruder (2), a melt pump (3) arranged downstream of the planetary roller extruder, a static cooling mixer equipment (4) arranged downstream of the melt pump, a foaming equipment (7) arranged downstream of the static cooling mixer equipment, and a fluid feeding equipment in fluid connection with the static cooling mixer equipment;
b) providing a hot melt processable polymeric composition in the planetary roller extruder;
c) optionally, degassing the hot melt processable polymeric composition;
d) exposing the hot melt processable polymeric composition to increased pressure and temperature conditions so that the pressure and temperature conditions of hot melt processable polymeric composition is greater than the supercritical pressure (P_{c}) and the supercritical temperature (T_{c}) conditions for a physical foaming agent;
e) providing, in the static cooling mixer equipment via the fluid feeding equipment, the physical foaming agent in supercritical conditions of the physical foaming agent;
f) mixing the hot melt processable polymeric composition and the physical foaming agent in the static cooling mixer equipment thereby forming a precursor of a foamed polymeric composition, wherein the physical foaming agent is mixed with the hot melt processable polymeric composition in supercritical conditions of the physical foaming agent;
g) optionally, reducing the pressure and/or temperature conditions of the precursor of a foamed polymeric composition whereby the pressure and temperature conditions are still greater than the supercritical pressure (P_{c}) and the supercritical temperature (T_{c}) conditions for the physical foaming agent; and
h) passing the precursor of the foamed polymeric composition through the foaming equipment and exposing the composition to a reduced pressure, whereby the physical foaming agent expands resulting in foaming of the precursor of a foamed polymeric composition.

8. A process according to claim 7, wherein the supercritical pressure (P_{c}) is greater than 6.5 MPa, greater than 7 MPa, greater than 7.5 MPa, greater than 8 MPa, greater than 10 MPa, greater than 12 MPa, greater than 15 MPa, greater than 18 MPa, greater than 20 MPa, greater than 23 MPa, greater than 25 MPa, or even greater than 28 MPa.

9. A process according to any of claim 7 or 8, wherein the supercritical temperature (T_{c}) is greater than 70°C, greater than 80°C, greater than 90°C, greater than 100°C, greater than 120°C, greater than 140°C, greater than 150°C, greater than 160°C, greater than 180°C, greater than 200°C, greater than 220°C, greater than 240°C, greater than 250°C, greater than 260°C, or even greater than 280°C.

10. A process according to any of claims 7 to 9, wherein the physical foaming agent is selected from the group consisting of carbon dioxide, nitrogen, SF₆, nitrous oxide, perfluorinated fluids, hydrofluorocarbons, hydrochlorofluorocarbons, hydrocarbons, argon, helium, noble gases, air, and any combinations or mixtures thereof.

11. A process according to any of claims 7 to 10, wherein the hot melt processable polymeric composition is selected from the group consisting of thermoplastic materials, elastomeric materials, thermoplastic elastomer materials, thermoplastic non-elastomeric materials, and any combinations or mixtures thereof.

12. A process according to any of claims 7 to **11,** wherein the hot melt processable polymeric composition is selected from the group consisting of rubber-based elastomeric materials, rubber-based non-elastomeric materials, polycarbonates, polyacrylics, polyacrylonitriles, polyvinyl chlorides, alkylene-vinyl acetate copolymers, alkylene-acrylic acid copolymers, polyurethanes, polyesters, polyamides, polyolefins, polyphenylene oxides, and any combinations or mixtures thereof.

13. A process according to any of claims 7 to 12, wherein the extrusion apparatus (1) is according to any of claims 1 to 6.

## Patentansprüche

1. Eine Extrusionsvorrichtung (1), aufweisend:
a) einen Planetenwalzenextruder (2);
b) eine Schmelzpumpe (3), die stromabwärts des Planetenwalzenextruders angeordnet ist;
c) eine statische Kühlmischeinrichtung (4), die stromabwärts der Schmelzpumpe angeordnet ist; und
d) eine Fluidzuführeinrichtung in Fluidverbindung mit der statischen Kühlmischeinrichtung;
wobei die Extrusionsvorrichtung konfiguriert ist, um ein physikalisches Schäumungsmittel über die Fluidzuführeinrichtung in die statische Kühlmischeinrichtung einzubringen und in der statischen Kühlmischeinrichtung das physikalische Schäumungsmittel mit einer durch Heißschmelzen verarbeitbaren Polymerzusammensetzung unter überkritischen Bedingungen des physikalischen Schäumungsmittels zu mischen; und
wobei die Extrusionsvorrichtung ferner aufweist:
e) eine Schäumungseinrichtung (7), die stromabwärts der statischen Kühlmischeinrichtung angeordnet ist.

2. Eine Vorrichtung (1) nach Anspruch 1, wobei die statische Kühlmischereinrichtung (4) einen Statikmischer (5) und einen Kühlmischer (6) aufweist.

3. Eine Vorrichtung (1) nach Anspruch 2, wobei die Fluidzuführeinrichtung in Fluidverbindung mit dem Statikmischer (5) steht.

4. Eine Vorrichtung (1) nach einem der Ansprüche 1 bis 3, wobei die Schmelzpumpe (3) derart ausgebildet ist, dass sie innerhalb der Schmelzpumpe eine erste Verarbeitungszone Z1 mit einem Druck P1 und eine zweite Verarbeitungszone Z2 mit einem Druck P2 bereitstellt.

5. Eine Vorrichtung (1) nach Anspruch 4, wobei die erste Verarbeitungszone Z1 und die zweite Verarbeitungszone Z2 zwei verschiedene Verarbeitungszonen sind, wobei P2 größer als P1 ist, wobei P2 größer als 6,5 MPa ist, und wobei die Differenz zwischen P1 und P2 größer als 3 MPa ist.

6. Eine Vorrichtung (1) nach einem der Ansprüche 1 bis 5, wobei die Fluidzufuhreinrichtung in Form eines Injektionsanschlusses vorliegt.

7. Ein Verfahren zum Herstellen einer geschäumten Polymerzusammensetzung, aufweisend die Schritte:
a) Bereitstellen einer Extrusionsvorrichtung (1), aufweisend einen Planetenwalzenextruder (2), eine Schmelzpumpe (3), die stromabwärts des Planetenwalzenextruders angeordnet ist, eine statische Kühlmischereinrichtung (4), die stromabwärts der Schmelzpumpe angeordnet ist, eine Schäumungseinrichtung (7), die stromabwärts der statischen Kühlmischereinrichtung angeordnet ist, und eine Fluidzuführeinrichtung in Fluidverbindung mit der statischen Kühlmischereinrichtung;
b) Bereitstellen einer durch Heißschmelzen verarbeitbaren Polymerzusammensetzung in dem Planetenwalzenextruder;
c) gegebenenfalls Entgasen der durch Heißschmelzen verarbeitbaren Polymerzusammensetzung;
d) Aussetzen der durch Heißschmelzen verarbeitbaren Polymerzusammensetzung gegenüber erhöhten Druck- und Temperaturbedingungen, sodass die Druck- und Temperaturbedingungen der durch Heißschmelzen verarbeitbaren Polymerzusammensetzung größer sind als die Bedingungen des überkritischen Drucks (P_{c}) und der überkritischen Temperatur (T_{c}) für ein physikalisches Schäumungsmittel;
e) Bereitstellen des physikalischen Schäumungsmittels in der statischen Kühlmischeinrichtung über die Fluidzuführeinrichtung unter überkritischen Bedingungen des physikalischen Schäumungsmittels;
f) Mischen der durch Heißschmelzen verarbeitbaren Polymerzusammensetzung und des physikalischen Schäumungsmittels in der statischen Kühlmischeinrichtung, wodurch ein Vorläufer einer geschäumten Polymerzusammensetzung gebildet wird, wobei das physikalische Schäumungsmittel mit der durch Heißschmelzen verarbeitbaren Polymerzusammensetzung unter überkritischen Bedingungen des physikalischen Schäumungsmittels gemischt wird;
g) gegebenenfalls Reduzieren der Bedingungen von Druck und/oder Temperatur des Vorläufers einer geschäumten Polymerzusammensetzung, wodurch die Bedingungen von Druck und Temperatur weiterhin größer sind als die Bedingungen des überkritischen Drucks (P_{c}) und der überkritischen Temperatur (T_{c}) für das physikalische Schäumungsmittel; und
h) Leiten des Vorläufers der geschäumten Polymerzusammensetzung durch die Schäumungseinrichtung und Aussetzen der Zusammensetzung gegenüber einem reduzierten Druck, wodurch sich das physikalische Schäumungsmittel ausdehnt, was zum Schäumen des Vorläufers einer geschäumten Polymerzusammensetzung führt.

8. Ein Verfahren nach Anspruch 7, wobei der überkritische Druck (P_{c}) größer als 6,5 MPa, größer als 7 MPa, größer als 7,5 MPa, größer als 8 MPa, größer als 10 MPa, größer als 12 MPa, größer als 15 MPa, größer als 18 MPa, größer als 20 MPa, größer als 23 MPa, größer als 25 MPa oder sogar größer als 28 MPa ist.

9. Ein Verfahren nach einem der Ansprüche 7 oder 8, wobei die überkritische Temperatur (T_{c}) größer als 70 °C, größer als 80 °C, größer als 90 °C, größer als 100 °C, größer als 120 °C, größer als 140 °C, größer als 150 °C, größer als 160 °C, größer als 180 °C, größer als 200 °C, größer als 220 °C, größer als 240 °C, größer als 250 °C, größer als 260 °C oder sogar größer als 280 °C ist.

10. Ein Verfahren nach einem der Ansprüche 7 bis 9, wobei das physikalische Schäumungsmittel ausgewählt ist aus der Gruppe bestehend aus Kohlendioxid, Stickstoff, SF₆, Distickstoffmonoxid, perfluorierten Fluiden, Fluorkohlenwasserstoffen, Fluorchlorkohlenwasserstoffen, Kohlenwasserstoffen, Argon, Helium, Edelgasen, Luft und beliebigen Kombinationen oder Mischungen davon.

11. Ein Verfahren nach einem der Ansprüche 7 bis 10, wobei die durch Heißschmelzen verarbeitbare Polymerzusammensetzung ausgewählt ist aus der Gruppe bestehend aus thermoplastischen Materialien, elastomeren Materialien, thermoplastischen elastomeren Materialien, thermoplastischen nicht-elastomeren Materialien und beliebigen Kombinationen oder Mischungen davon.

12. Ein Verfahren nach einem der Ansprüche 7 bis 11, wobei die durch Heißschmelzen verarbeitbare Polymerzusammensetzung ausgewählt ist aus der Gruppe bestehend aus kautschukbasierten elastomeren Materialien, kautschukbasierten nicht-elastomeren Materialien, Polycarbonaten, Polyacrylen, Polyacrylnitrilen, Polyvinylchloriden, Alkylen-Vinylacetat-Copolymeren, Alkylen-Acrylsäure-Copolymeren, Polyurethanen, Polyestern, Polyamiden, Polyolefinen, Polyphenylenoxiden und beliebigen Kombinationen oder Mischungen davon.

13. Ein Verfahren nach einem der Ansprüche 7 bis 12, wobei die Extrusionsvorrichtung (1) nach einem der Ansprüche 1 bis 6 ist.

## Revendications

1. Appareil d'extrusion (1) comprenant :
a) une extrudeuse à rouleau satellite (2) ;
b) une pompe de fusion (3) agencée en aval de l'extrudeuse à rouleau satellite planétaire ;
c) un équipement mélangeur de refroidissement statique (4) agencé en aval de la pompe de fusion ; et
d) un équipement d'alimentation en fluide en liaison fluidique avec l'équipement mélangeur de refroidissement statique ;
dans lequel l'appareil d'extrusion est conçu pour introduire un agent moussant physique par l'intermédiaire de l'équipement d'alimentation en fluide dans l'équipement de mélangeur de refroidissement statique et pour mélanger, dans l'équipement de mélangeur de refroidissement statique, l'agent moussant physique avec une composition polymère thermofusible dans des conditions supercritiques de l'agent moussant physique ; et
dans lequel l'appareil d'extrusion comprend en outre :
e) un équipement de moussage (7) agencé en aval de l'équipement mélangeur de refroidissement statique.

2. Appareil (1) selon la revendication 1, dans lequel l'équipement de mélangeur de refroidissement statique (4) comprend un mélangeur statique (5) et un mélangeur de refroidissement (6).

3. Appareil (1) selon la revendication 2, dans lequel l'équipement d'alimentation en fluide est en liaison fluidique avec le mélangeur statique (5).

4. Appareil (1) selon l'une quelconque des revendications 1 à 3, dans lequel la pompe de fusion (3) est conçue de sorte à fournir une première zone de traitement Z1 ayant une pression P1 et une seconde zone de traitement Z2 ayant une pression P2 à l'intérieur de la pompe de fusion.

5. Appareil (1) selon la revendication 4, dans lequel la première zone de traitement Z1 et la deuxième zone de traitement Z2 sont deux zones de traitement distinctes, dans lequel P2 est supérieur à P1, dans lequel P2 est supérieur à 6,5 MPa, et dans lequel la différence entre P1 et P2 est supérieure à 3 MPa.

6. Appareil (1) selon l'une quelconque des revendications 1 à 5, dans lequel l'équipement d'alimentation en fluide se présente sous la forme d'un orifice d'injection.

7. Processus de fabrication d'une composition polymère moussée, comprenant les étapes consistant à :
a) fournir un appareil d'extrusion (1) comprenant une extrudeuse à rouleau satellite (2), une pompe de fusion (3) agencée en aval de l'extrudeuse à rouleau satellite, un équipement de mélangeur de refroidissement statique (4) agencé en aval de la pompe de fusion, un équipement de moussage (7) agencé en aval de l'équipement de mélangeur de refroidissement statique, et un équipement d'alimentation en fluide en liaison fluidique avec le mélangeur de refroidissement statique l'équipement ;
b) fournir une composition polymère transformable par fusion à chaud dans l'extrudeuse à rouleau satellite planétaire ;
c) éventuellement, dégazer la composition polymère transformable par fusion à chaud ;
d) exposer la composition polymère transformable thermofusible à des conditions de pression et de température accrues de sorte que les conditions de pression et de température de la composition polymère transformable thermofusible sont supérieures aux conditions de pression supercritique (P_{c}) et de température supercritique (T_{c}) pour un agent moussant physique ;
e) fournir, dans l'équipement mélangeur de refroidissement statique par l'intermédiaire de l'équipement d'alimentation en fluide, l'agent moussant physique dans des conditions supercritiques de l'agent moussant physique ;
f) mélanger la composition polymère thermofusible et l'agent moussant physique dans l'équipement mélangeur de refroidissement statique, formant ainsi un précurseur d'une composition polymère moussée, dans lequel l'agent moussant physique est mélangé à la composition polymère thermofusible dans des conditions surcritiques de l'agent moussant physique ;
g) éventuellement, réduire les conditions de pression et/ou de température du précurseur d'une composition polymère expansée, selon lequel les conditions de pression et de température sont encore supérieures aux conditions de pression supercritique (P_{c}) et de température supercritique (T_{c}) pour l'agent moussant physique ; et
h) passer le précurseur de la composition polymère expansée à travers l'équipement de moussage et l'exposition de la composition à une pression réduite, selon lequel l'agent moussant physique se dilate, entraînant le moussage du précurseur d'une composition polymère expansée.

8. Procédé selon la revendication 7, dans lequel la pression supercritique (P_{c}) est supérieure à 6,5 MPa, supérieure à 7 MPa, supérieure à 7,5 MPa, supérieure à 8 MPa, supérieure à 10 MPa, supérieure à 12 MPa, supérieure à 15 MPa, supérieure à 18 MPa, supérieure à 20 MPa, supérieure à 23 MPa, supérieure à 25 MPa, ou même supérieure à 28 MPa.

9. Procédé selon l'une quelconque de la revendication 7 ou 8, dans lequel la température supercritique (T_{c}) est supérieure à 70 °C, supérieure à 80 °C, supérieure à 90 °C, supérieure à 100 °C, supérieure à 120 °C, supérieure à 140 °C, supérieure à 150 °C, supérieure à 160 °C, supérieure à 180 °C, supérieure à 200 °C, supérieure à 220 °C, supérieure à 240 °C, supérieure à 250 °C, supérieure à 260 °C, voire supérieure à 280 °C.

10. Procédé selon l'une quelconque des revendications 7 à 9, dans lequel l'agent moussant physique est choisi dans le groupe constitué par le dioxyde de carbone, l'azote, le SF₆, le protoxyde nitreux, les fluides perfluorés, les hydrofluorocarbures, les hydrochlorofluorocarbures, les hydrocarbures, l'argon, l'hélium, les gaz nobles, l'air, et toutes combinaisons ou tous mélanges de ceux-ci.

11. Procédé selon l'une quelconque des revendications 7 à 10, dans lequel la composition polymère transformable par fusion à chaud est choisie dans le groupe constitué de matériaux thermoplastiques, matériaux élastomères, matériaux élastomères thermoplastiques, matériaux non élastomères thermoplastiques, et toutes combinaisons ou tous mélanges de ceux-ci.

12. Procédé selon l'une quelconque des revendications 7 à 11, dans lequel la composition polymère transformable par fusion à chaud est choisie dans le groupe constitué de matériaux élastomères à base de caoutchouc, à base de caoutchouc non élastomère matériaux, polycarbonates, polyacryliques, polyacrylonitriles, chlorures de polyvinyle, copolymères d'alkylène et d'acétate de vinyle, copolymères d'alkylène et d'acide acrylique, polyuréthanes, polyesters, polyamides, polyoléfines, oxydes de polyphénylène, et toutes combinaisons ou tous mélanges de ceux-ci.

13. Procédé selon l'une quelconque des revendications 7 à 12, dans lequel l'appareil d'extrusion (1) est selon l'une quelconque des revendications 1 à 6.
